# EUROPÄISCHE PATENTANMELDUNG

(11) **EP 0 828 207 A2**
(43) Veröffentlichungstag der Anmeldung: **11.03.1998**
(21) Anmeldenummer: 97110947.5
(22) Anmeldetag: 02.07.1997
(51) Int. Cl.: G05G 1/10

(54) **Drehknopfoberteil**

(30) Priorität: 10.09.1996 DE 19636643
(71) Anmelder: Preh-Werke GmbH & Co. KG, 97616 Bad Neustadt (DE)
(72) Erfinder: Bauer, Karl-Heinz, 97616 Bad Neustadt (DE); Müller, Klaus, 97618 Unsleben (DE); Moret, Reinhold, 97638 Mellrichstadt (DE)
(74) Vertreter: Pfeiffer, Helmut, Dipl.-Ing.

(57) **Zusammenfassung**

Die Erfindung betrifft einen Drehknopf (1) mit einem Gegenstück (2) als Drehknopfunterteil und einem Drehknopfoberteil (3), an dem sich ein Griffteil (4) anschließt. Das Drehknopfoberteil (3) besteht dabei aus einer Platte (9), die mit einem flexiblen elastischen Material überzogen ist, so daß Flanken (5.1) am Griffteil (4) flexibel verformbar sind, wenn das Griffteil (4) betätigt wird. Dadurch wird eine bessere Handhabung sowie eine geräuscharme Bedienung des Drehknopfes (1) erreicht. Über eine flexible Stirnfläche (5.2) am Griffteil (4) sind zusätzliche Tast- und Schaltfunktionen ausführbar.

## Beschreibung

Die Erfindung bezieht sich auf ein Drehknopfoberteil gemäß dem Oberbegriff des Patentanspruchs 1 sowie des Patentanspruchs 7.

Einen Drehknopf eines Schalters beschreibt die DE 87 02 558 U1. Hierbei besitzt der Drehknopf in allgemein bekannter Art und Weise einen Ruheraum/Freiraum zur Aufnahme einer Glühlampe. In dem runden Drehknopf befinden sich mehrere Lichtleiter zur Stellungsanzeige des Drehknopfes und damit des Schalters.

Aus der Reihe der weiterhin bekannten Drehknöpfe, insbesondere der Schalter und Potentiometer in Kraftfahrzeugarmaturenbrettern für Lüftungs-, Heizung- oder Klimaanlagen, sind ferner Drehknöpfe bekannt, die neben einem runden Drehknopfunterteil ein keilförmiges Griffteil aufweisen.

Die Forderungen, in der Kraftfahrzeugtechnik nach kleineren Bedienteilen in Armaturenbrettern und um ein Mehrangebot im Fahrerbereich anbieten zu können, steigen. Diese Forderungen gehen auch zu Lasten der Drehknopfgröße, so daß bei kleineren Drehknöpfen Probleme der Kraftübertragung und eine schlechte Bedienbarkeit der Einstellorgane auftreten.

Die Aufgabe der Erfindung besteht darin, einen Drehknopf so zu gestalten, daß die auftretenden Probleme gelöst werden.

Die Aufgabe wird durch die im Patentanspruch 1 und im Patentanspruch 7 angegebenen kennzeichnenden Merkmale gelöst.

Durch die Verwendung eines weichen Werkstoffes beim Drehknopfoberteil ist dieses griffig. Neben dieser angenehmen Handhabung wird die Verstellkraft, die auf den Drehknopf wirkt, trotzdem maximal auf ein Einstellorgan übertragen, da der Drehknopf außerhalb und innerhalb der Flanken eines Griffteils stabil ist.

Vorteilhafte Ausführungen schließen sich in den Unteransprüchen an.

Durch die Verwendung eines Bügels im Griffteil wird die Stabilität des Drehknopfoberteils erhöht. Bei Einsatz von lichtleitendem Material als Rohteil des Drehknopfoberteils können zusätzliche Lichtverteilungen innerhalb des Drehknopfoberteils entfallen. Eine bessere Bedienbarkeit des Drehknopfoberteils ergibt sich aus dem konkav ausgeführten Rohteil im Bereich des Griffteils.

Es können Schaltfunktionen in dem Drehknopfoberteil integriert werden, so daß eine weitere Platzersparnis im Armaturenbereich eintritt.

Anhand von Ausführungsbeispielen mit Zeichnung wird die Erfindung nachfolgend beschrieben.

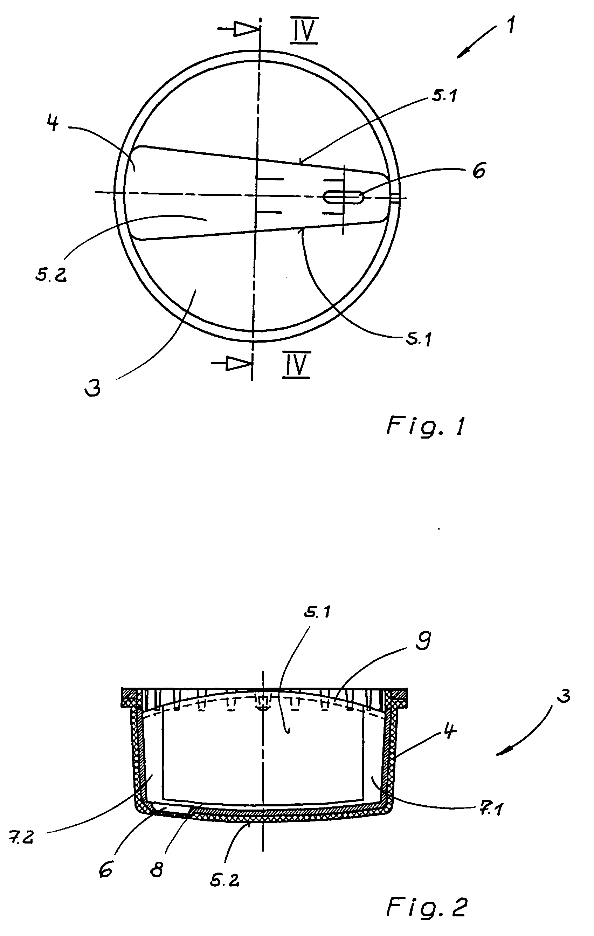

Es zeigt:
Fig. 1
   eine Draufsicht auf ein Drehknopfoberteil,
Fig. 2
   eine Seitenansicht des Drehknopfoberteils in Schnittdarstellung,
Fig. 3
   ein Drehknopfoberteil im Schnitt IV - IV der Fig. 1 in Grundstellung,
Fig. 4
   das Drehknopfoberteil im Schnitt IV - IV der Fig. 1 bei einer Bedienung,
Fig. 5
   einen vollständigen Drehknopf mit Tastfunktion in einer Einbausituation im Schnitt.

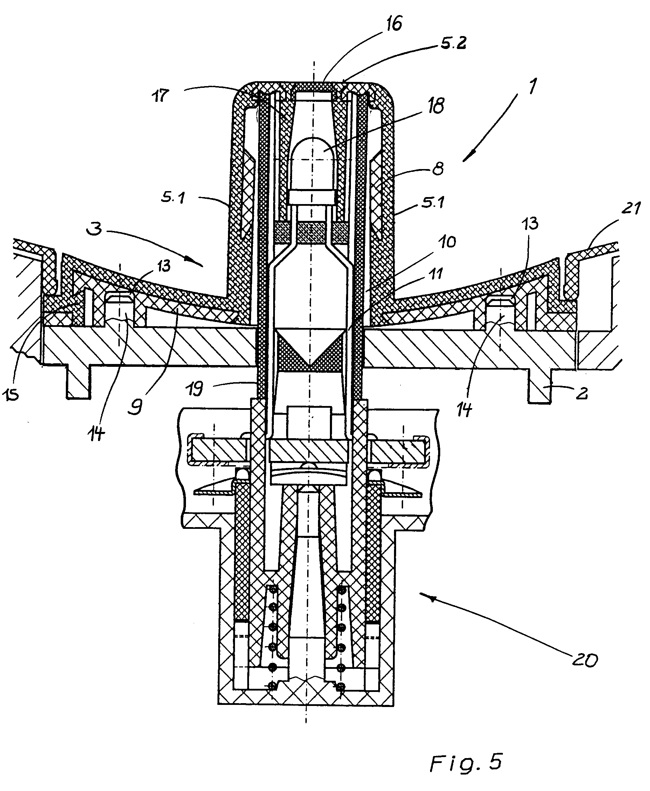

In Fig. 1 dargestellt ist ein Drehknopfoberteil 3 eines Drehknopfs 1, der in bekannter Art und Weise aus einem Gegenstück 2 als Drehknopfunterteil (Fig. 5). und einem hütchenförmigen Drehknopfoberteil 3 besteht. Das Drehknopfoberteil 3 besitzt ein keilförmiges Griffteil 4, das an seinen Breitseiten Flanken 5.1 aufweist. In einer Stirnfläche 5.2 des Griffteils 4 ist eine Ausnehmung für eine transparente Abschlußfläche 6 enthalten.

Im Griffteil 4 befinden sich, wie in Fig. 2 zu erkennen, an den Schmalseiten des Griffteils 4 Stützteile 7.1 und 7.2, die vorzugsweise über einen Bügel 8 miteinander in Verbindung stehen. Dabei kann der Bügel 8 oberhalb oder seitlich an den Stützteilen 7.1 und 7.2 geführt und mit diesen Stützteilen 7.1 und 7.2 einteilig ausgeführt sein. Die Stützteile 7.1 und 7.2 sind auf einer Platte 9 an zwei sich gegenüberliegenden Stellen senkrecht angeordnet und weisen eine säulenartige, hohle Form auf. Die Platte 9 besteht vorzugsweise aus lichtleitendem Material und steht mit der transparenten Abschlußfläche 6 über das Stützteil 7.2 in Verbindung. Dazu bestehen auch die Stützteile 7.1 und 7.2 sowie der Bügel 8 vorzugsweise aus lichtleitendem Material. Die Platte 9 und die Stützteile 7.1 und 7.2 bilden ein Rohteil des Drehknopfoberteils 3 und können bei gleichem Material einteilig (einstückig) ausgeführt sein. Über die Platte 9 und den Stützteilen 7.1 und 7.2 ist ein elastisches Material, ein Elastomer, umspritzt, wodurch das Drehknopfoberteil 3 komplettiert wird.
Dieses Elastomer, beispielsweise ein Silikon, besitzt eine Shorehärte von 30 bis 80, vorzugsweise 60 Shore.

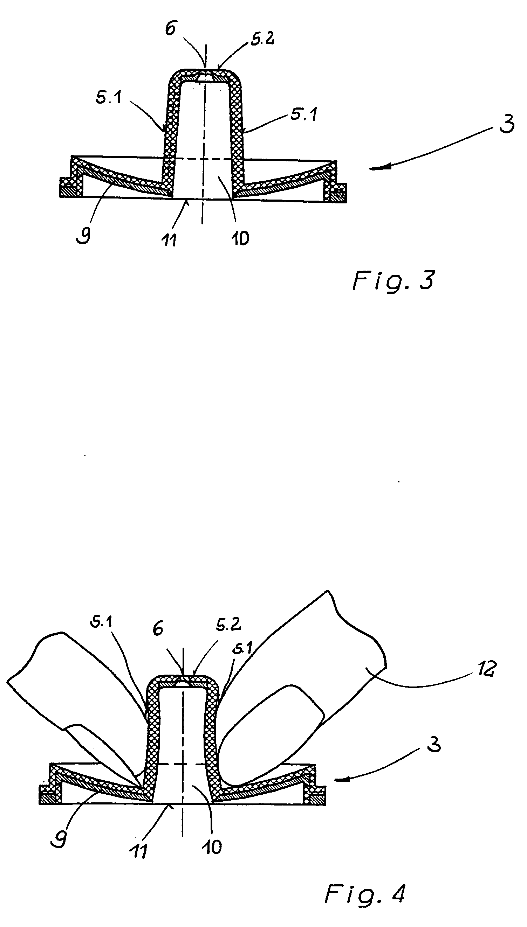

Das Drehknopfoberteil 3 ist im Bereich der Platte 9 konkav ausgebildet (siehe Fig. 3). Zwischen den Stützteilen 7.1 und 7.2 innerhalb der Flanken 5.1 und der Stirnfläche 5.2 besteht ein Freiraum 10, dessen geräteseitige Öffnung mit 11 bezeichnet ist. Durch die se Öffnung 11 kann in herkömmlicher Art und Weise eine Achse mit oder ohne Lichtquelle eines Einstellorgans, beispielsweise eines Schalters oder eines Potentiometers geführt sein. Der Freiraum 10 innerhalb des Griffteils 4 ist neben der Shorehärte des verwendeten Materials und der Materialstärke der Flanken 5.1 bestimmend für die Elastizität der Flanken 5.1, d. h. deren Nachgiebigkeit.

So bewirken eine kleine Shorehärte und ein großer freier Raum 10 zwischen den Flanken 5.1 und eine kleine Materialstärke in den Flanken 5.1 eine höhere Nachgiebigkeit und Beweglichkeit der Flanken 5.1, als dies bei einer großen Shorehärte, einem kleinen Freiraum 10 zwischen den Flanken 5.1 und einer größeren Materialstärke in den Flanken 5.1 der Fall ist. Dabei ist zu beachten, daß eine zu kleine Shorehärte eine Instabilität des Drehknopfoberteils 3 bewirkt. Eine zu geringe Materialstärke bewirkt ein schnelles Reißen des Griffteils 4.

Wie in Fig. 4 angegeben, greifen Finger 12 einer Bedienperson an die Flanken 5.1 des Griffteils 4 des Drehknopfoberteils 3. Dabei verformen die Finger 12 die Flanken 5.1 am Griffteil 4 durch leichtes Drücken und besitzen eine gute Angriffsfläche am Griffteil 4 des Drehknopfes 1. Der beschriebene Aufbau des Drehknopfoberteils 3 mit den Stützen 7.1 und 7.2 gewährleistet eine innere Stabilität, so daß bei Drehung des Drehknopfoberteils 3 eine geräteseitige Mitnahme des angekuppelten Gegenstücks 2 erfolgt (wie Fig. 5 entnehmbar ist). Die Befestigung des Drehknopfoberteils 3 an dem Gegenstück 2 erfolgt beispielsweise über Schnapphaken, wobei die Schnappöffnungen in den Stützteilen 7.1 und 7.2 angebracht sind und die Schnapphaken am Gegenstück 2.

Wie der Fig. 5 weiterhin entnehmbar, sind auch die Befestigung durch Führungslöcher 13 an der Platte 9 und Stifte 14 am Gegenstück 2 möglich. Am Gegenstück 2 ist in herkömmlicher Art und Weise ein Einstellorgan befestigt, so daß dieses Einstellorgan gleichfalls mitverstellt wird.

Im Ausführungsbeispiel der Fig. 5 kann der Drehknopf 1 so gestaltet werden, daß im Drehknopfoberteil 3 zusätzlich ein Schaltstößel 19 angeordnet ist. Der obere Bereic zwischen den Stützteilen 7.1 und 7.2 am Griffteil 4 ist vorzugsweise ohne einen oberen Bügel 8 und durch das verwendete Material (Elastomer) in der Stirnfläche 5.2 flexibel und elastisch ausgeführt. Durch Druck auf die Stirnfläche 5.2 des Griffteils 4 im Bereich des Freiraums 10 erfolgt eine Verformung an der Stirnfläche 5.2. Die Stirnfläche 5.2 weist vorzugsweise zusätzlich ein weiteres transparentes Einlegeteil 16 mit Symbolcharakter auf. Unter diesem Einlegeteil 16, mit der Stirnfläche 5.2 verbunden, befindet sich ein hoher Nippel 17, dessen innerer Durchmesser dem äußeren Durchmesser eines Leuchtmittels 18 entspricht und sich zur Stirnfläche 5.2 zylindrisch verjüngt. Gleichzeitig greift der rohrförmiger Stößel 19 eines Tastorgans 20 durch die Öffnung 11 in den Freiraum 10 des Drehknopfoberteils 3, wodurch eine Tastverbindung zwischen der Stirnfläche 5.2 und dem Tastorgan 20 hergestellt wird. Eine darunter befindliche herkömmliche Tast- bzw. Rastmechanik des Tastorgans 20 setzt die Verformung der Stirnfläche 5.2 in bekannter Art und Weise als Schaf oder Tastfunktion um.

Das Drehknopfoberteil 3 mit Griffteil 4 wird nach bekannter Spritzgußtechnik hergestellt. Die dazu verwendeten Spritzgußformen ergeben sich aus dem Aufbau des Drehknopfoberteils 3. Zuerst wird die Platte 9 mit Stützteilen 7.1 und 7.2 sowie deren möglicher Bügel 8 zur Verbindung untereinander als Rohteil des Drehknopfoberteils 3 hergestellt, wobei die Platte 9 an ihrer Außenkante vorzugsweise kleine Öffnungen/Löcher 15 besitzt. Danach wird dieses Rohteil mit dem Elastomer überspritzt. Dabei gelangt das Elastomer zum besseren Halt in die kleinen Löcher 15 und füllt diese aus.

Bedingt durch den elastomeren Überzug des Drehknopfoberteils 3 liegt nach Einbau des Drehknopfs 1 in eine Blende 21 des Armaturenbretts ein weiches Material an dieser Blende 21 an. Dadurch werden Geräusche beim Drehen des Drehknopfs 1 vermieden, wobei trotz weichem Material des Drehknopfoberteils 3 keine Zerstörung desselbigen durch die Blende 21 erfolgt.

Es versteht sich von selbst, daß im Rahmen der Ansprüche Änderungen möglich sind.
So können die Platte 9, die Stützteile7.1 und 7.2 sowie der Bügel 8 aus anderen, das Drehknopfoberteil 3 stützenden (stabilisierenden) Materialien bestehen, wenn keine Stellungsanzeige des Drehknopfes 1 notwendig ist und somit die transparente Abschlußfläche 6 entfällt. Auch kann das Griffteil 4 rund sein, so daß Ringflanken 5.1 gebildet werden, an die die Finger 12 greifen.

Durch spezielle weitere Spritzgußtechniken ist es möglich, das Drehknopfoberteil 3 als Spritzteil aus einem elastischen Elastomer zu bilden, wobei die Platte 9 aus hartem Material eingespritzt ist und ausgehend von dieser gebildeten Grundfläche ein hohles Griffteil 4 mit einer größeren Materialstärke im Bereich der Schmalseiten des Griffteils 4 als im Bereich der Flanken 5.1 angeordnet ist.

Dabei dient die Platte 9 zur Erhöhung der inneren Stabilität des Drehknopfoberteils 3. Die Stützen 7.1 und 7.2 entfallen, da die größere Materialstärke im Bereich der Schmalseiten deren Funktion besitzt. Das Griffteil 4 besteht somit nur noch aus dem Elastomer, wobei die Bereiche der Schmalseiten massiv gebildet und einteilig mit den Breitseiten ausgeführt sind. Die Flanken 5.1 selbst sind weiterhin flexibel und verformbar gestaltet. Durch die flexible Gestaltung der Stirnfläche 5.2 ist auch in dieser Ausführung eine Schaltfunktion im Drehknopfoberteile 3 integrierbar.

## Patentansprüche

1. Drehknopfoberteil eines Drehknopfes zur Betätigung eines Bedienteils, insbesondere eines Lüftungs-, Klima- oder Heizungsbedienteils in Kraftfahrzeugen, der einerseits mit einem geräteseitigen Einstellorgan gekuppelt ist und andererseits das Drehknopfoberteil mit einem hohlen Griffteil aufweist, dadurch gekennzeichnet, daß das Drehknopfoberteil (3) durch Umspritzung eines aus hartem Material bestehenden Rohteils mit einem Elastomer gebildet ist, wobei das Rohteil aus einer Platte (9) besteht, die mit randseitig, senkrecht dazu angeordneten, sich gegenüberliegenden, säulenartigen Stützteilen (7.1, 7.2) versehen ist, zwischen denen bei der Umspritzung ein Freiraum (10) belassen ist und die umspritzten Stützteile (7.1, 7.2) das Griffteil (4) bilden.

2. Drehknopfoberteil nach Anspruch 1, dadurch gekennzeichnet, daß das Elastomer ein Silikon mit einer Shorehärte von 30 bis 80 Shore ist.

3. Drehknopfoberteil nach Anspruch 1, dadurch gekennzeichnet, daß zwischen den Stützteilen (7.1, 7.2) ein Bügel (8) stirnseitig angeordnet ist.

4. Drehknopfoberteil nach Anspruch 1, dadurch gekennzeichnet, daß zwischen den Stützteilen (7.1, 7.2) im Bereich der Flanken (5.1) des Griffteils (4) Bügel (8) gegenüberliegend angeordnet sind.

5. Drehknopfoberteil nach einem oder mehreren der vorgenannten Ansprüche 1 bis 4, dadurch gekennzeichnet, daß das Rohteil des Drehknopfoberteils (3) aus lichtleitendem Material besteht.

6. Drehknopfoberteil nach einem oder mehreren der vorgenannten Ansprüche 1 bis 5, dadurch gekennzeichnet, daß das Drehknopfoberteil (3) im Bereich der Platte (9) konkav ausgebildet ist.

7. Drehknopfoberteil eines Drehknopfes zur Betätigung eines Bedienteils, insbesondere eines Lüftungs-, Klima- oder Heizungsbedienteils in Kraftfahrzeugen, der einerseits mit einem geräteseitigen Einstellorgan gekuppelt ist und andererseits das Drehknopfoberteil mit einem hohen Griffteil aufweist, dadurch gekennzeichnet, daß das Drehknopfoberteil (3) als Spritzteil aus einem elastischen Elastomer gebildet ist, wobei eine Grundplatte (9) aus hartem Material eingespritzt ist und ausgehend von der von dieser gebildeten Grundfläche ein hohes Griffteil (4) mit einer größeren Materialstärke im Bereich der Schmalseiten des Griffteils (4) als im Bereich der Flanken (5.1) angeordnet ist.

8. Drehknopfoberteil nach einem oder mehreren der vorgenannten Ansprüche 1 bis 6, dadurch gekennzeichnet, daß eine Stirnfläche (5.2) des Drehknopfoberteils (3) gleichfalls im Freiraum (10) verformbar ist.

9. Drehknopfoberteil nach Anspruch 7, dadurch gekennzeichnet, daß ein Stößel (19) in das Innere des Griffteils (4) bis zur Stirnfläche (5.2) hineinragt.

10. Drehknopfoberteil nach einem oder mehreren der vorgenannten Ansprüche 1 bis 8, dadurch gekennzeichnet, daß ein transparentes Einlegeteil (16) mit Symbolcharakter in der Stirnfläche (5.2) als Lichtaustritt angebracht ist.
